# EUROPEAN PATENT SPECIFICATION

(11) **EP 4 117 848 B1**
(45) Date of publication and mention of the grant of the patent: **02.07.2025**
(21) Application number: 21724046.4
(22) Date of filing: 09.03.2021
(51) Int. Cl.: B23D 47/00, B23D 61/02

(54) **ROTARY DISC SAW**
DREHSCHEIBENSÄGE
SCIE CIRCULAIRE ROTATIVE

(30) Priority: 10.03.2020 IE S20200047
(43) Date of publication of application: 18.01.2023
(73) Proprietor: JFC Arkedia Group Limited, Tuam Galway (IE)
(72) Inventor: EGLIN, Adrian, 79211 Denzlingen (DE); CONCANNON, John Francis, Tuam County Galway (IE); VERMEULEN, Nicolas, 85500 Les Herbiers (FR)
(74) Representative: Gorman, Francis Fergus
(86) International application number: PCT/IE2021/000004
(87) International publication number: WO 2021/181370

(56) References cited:
- DE-U1- 202004 009 761
- JP-A- S5 669 078
- KR-A- 20110 027 230
- US-A- 4 331 056

## Description

The present invention relates to a rotary disc saw, and in particular, to a rotary disc saw of the type, typically used in an angle grinder for cutting and grinding metal, stone, masonry materials, and the like.

Rotary disc saws, typically, comprise a carrier disc defining a circular outer periphery. A plurality of cutting elements are secured to and extend radially outwardly from the outer periphery of the carrier disc and are spaced apart circumferentially around the periphery thereof. A shaft accommodating bore extends co-axially centrally through the carrier disc for accommodating a drive shaft for rotating the rotary disc saw. Typically, such disc saws range in nominal diameter from 150mm to 450mm, where the nominal diameter is measured to include the carrier disc and the cutting elements. In a disc saw of nominal diameter of 230mm, the carrier disc, typically would be of diameter in the range of 198mm to 210mm, and would carry thirteen to sixteen cutting elements, with each cutting element extending a radial distance from the carrier disc in the range of 10mm to 17mm. The cutting elements would be circumferentially spaced apart from each other around the carrier disc a circumferential distance in the range of 3mm to 10mm, and each cutting element would typically extend a circumferential distance around the periphery of the carrier disc of approximately 40mm. In general, the cutting elements are impregnated with diamonds or synthetic diamonds, and are of thickness greater than the carrier disc, in order to avoid jamming of the carrier disc in the workpiece when the carrier disc extends into a slot in the workpiece cut by the rotary disc saw. In general, the carrier disc of such rotary disc saws is of steel material.

A problem with such rotary disc saws relates to the noise which they generate when cutting or grinding metal, stone and other masonry materials. It has been found that some rotary disc saws when cutting masonry materials can generate excessive noise which can damage the hearing of an operator. In such a rotary disc saw cutting a concrete block, the noise generated at one metre from the rotary disc saw was measured at 107dB(A). At three metres from the rotary disc saw the noise generated by the same rotary disc saw cutting the same concrete block was measured at 96.5dB(A), while at five metres from the same rotary disc saw cutting the same concrete block the noise was measured at 95.5dB(A). Such noise levels can be seriously injurious to the hearing of an operator, particularly if an operator is exposed to such noise over long time periods. In order to minimise hearing damage, it is known for operators of such rotary disc saws to wear protective ear covers, which deaden the sound somewhat. However, such protective ear covers do not prevent some of the generated noise entering the ear, and thus over prolonged exposure to noise generated by such rotary disc saws an operator may suffer significant deterioration of hearing, to the extent that hearing is damaged irreversibly. There is therefore a need for a rotary disc saw which addresses this problem.

The present invention is directed towards such a rotary disc saw.

Korean Patent Specification KR 2011 0027230 A discloses the preamble of claim 1, in particular a cutting tool with reduced vibration and noise which comprises a carrier disc, and a damping disc of a viscoelastic material. The damping disc is pre-coupled to a cover of metal or hard plastics material. The damping disc with the cover adhered thereto is attached to the carrier disc. The ratio of the area of the damping disc to the carrier disc may be in the range of 5% to 80% and preferably 50%.

According to the invention there is provided a rotary disc saw comprising
a carrier disc having a pair of major surfaces and a shaft accommodating bore extending therethrough from one of the major surfaces to the other one of the major surfaces, the carrier disc terminating adjacent its outer periphery in one or more cutting elements,
a noise damping disc having a pair of major surfaces, and a shaft accommodating bore extending therethrough from one of the major surfaces of the noise damping disc to the other one of the major surfaces thereof, the noise damping disc being attached to one of the major surfaces of the carrier disc and being coaxial with the carrier disc,
wherein
the noise damping disc is of maximum diameter not greater than 60% of the diameter of the outer periphery of the carrier disc, and is attached to the carrier disc by a layer of a resilient adhesive located between adjacent ones of the major surfaces of the carrier disc and the noise damping disc and extending continuously over substantially the entire adjacent major surface of the noise damping disc.

Preferably, the adhesive of the adhesive layer comprises an elastic adhesive, and more preferably, the adhesive of the adhesive layer comprises a rubberlike adhesive.

In one embodiment of the invention the adhesive of the adhesive layer when cured forms a rubberlike adhesive layer, and preferably, forms an elastic adhesive layer.

Ideally, the adhesive layer extends over the entire area of the corresponding major surface of the noise damping disc.

In another embodiment of the invention the adhesive of the adhesive layer is temperature stable at temperatures up to 70°C, and preferably, up to 120°C, and in another embodiment of the invention the adhesive is temperature stable at a temperature of 170°C for a period of up to 20 minutes.

In one embodiment of the invention the adhesive layer is of thickness in the range of 0.3mm to 1mm, and preferably, the adhesive layer is of thickness in the range of 0.3mm to 0.8mm, and advantageously, the adhesive layer is of thickness of approximately 0.8mm.

In another embodiment of the invention the maximum diameter of the noise damping disc lies in the range of 38% to 60% of the diameter of the outer periphery of the carrier disc. Preferably, the maximum diameter of the noise damping disc lies in the range of 40% to 50% of the diameter of the outer periphery of the carrier disc, and advantageously, the maximum diameter of the noise damping disc lies in the range of 42% to 45% of the diameter of the outer periphery of the carrier disc, and ideally, the maximum diameter of the noise damping disc is approximately 44% of the diameter of the carrier disc.

In one embodiment of the invention the thickness of the noise dampening disc between the major surfaces thereof lies in the range of 1.0mm to 2.5mm, and preferably, the thickness of the noise dampening disc between the major surfaces thereof lies in the range of 1.25mm to 2.0mm, and advantageously, the thickness of the noise dampening disc between the major surfaces thereof is approximately 1.5mm.

In another embodiment of the invention the outer periphery of the noise damping disc is substantially circular.

In one embodiment of the invention a plurality of circumferentially spaced apart noise damping slots extend inwardly into the noise damping disc from the outer periphery thereof. Preferably, the noise damping slots of the noise damping disc extend substantially radially inwardly into the noise damping disc from the outer periphery thereof.

Advantageously, each noise damping slot of the noise damping disc terminates adjacent its inward end in an arcuate slot, which preferably, is of partly circular shape, and advantageously, is of partly spiral shape. Preferably, the partly circular part of each noise damping slot of the noise damping disc terminates in a partly circular shape part, which in turn terminates in a partly spiral shape part.

In one embodiment of the invention each noise damping slot of the noise damping disc is of width in the range of 0.1mm to 1mm. Preferably, each noise damping slot of the noise damping disc is of width in the range of 0.1mm to 0.5mm. Advantageously, each noise damping slot of the noise damping disc is of width of approximately 0.2mm.

In another embodiment of the invention each noise damping slot of the noise damping disc extends into the noise damping disc from the outer periphery thereof a radial distance from the outer periphery of the noise damping disc not greater than 26% of the diameter of the noise damping disc.

Preferably, each noise damping slot of the noise damping disc extends into the noise damping disc from the outer periphery thereof a radial distance from the outer periphery of the noise damping disc in the range of 15% to 26% of the diameter of the noise damping disc.

Preferably, each noise damping slot of the noise damping disc extends through the noise damping disc from one of the major surfaces thereof to the other one of the major surfaces thereof.

In another embodiment of the invention the diameter of the shaft accommodating bore extending through the noise damping disc is greater than the diameter of the shaft accommodating bore extending through the carrier disc.

In another embodiment of the invention the noise damping disc comprises steel material.

In another embodiment of the invention a plurality of cutting elements are provided spaced apart circumferentially around the outer periphery of the carrier disc. Advantageously, each cutting element extends radially from the carrier disc, and preferably, each cutting element extends radially from the outer periphery of the carrier disc.

Preferably, the carrier disc defines a circular outer periphery.

In a further embodiment of the invention the carrier disc comprises steel material.

The invention will be more clearly understood from the following description of some preferred embodiments thereof which are given by way of example only with reference to the accompanying drawings, in which:
Fig. 1 is a perspective view of a rotary disc saw according to the invention,
Fig. 2 is an exploded perspective view of the rotary disc saw of Fig. 1,
Fig. 3 is a side elevational view of the rotary disc saw of Fig. 1,
Fig. 4 is an end elevational view of the rotary disc saw of Fig. 1,
Fig. 5 is a transverse cross-sectional end elevational view of the rotary disc saw of Fig. 1 on the line V-V of Fig. 3,
Fig. 6 is an enlarged cross-sectional end elevational view of the rotary disc saw of Fig. 1,
Fig. 7 is an exploded end elevational view of the rotary disc saw of Fig. 1,
Fig. 8 is a perspective view of a rotary disc saw according to another embodiment of the invention,
Fig. 9 is an enlarged plan view of a portion of the rotary disc saw of Fig. 8, and
Fig. 10 illustrates a table showing comparative results of acoustic noise tests carried out on the rotary disc saw against a control rotary disc saw.

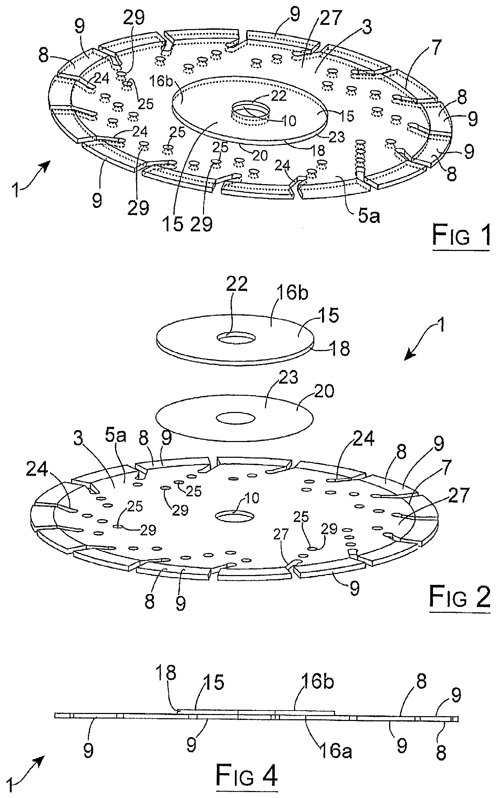

Referring to the drawings and initially to Figs. 1 to 7 thereof, there is illustrated a rotary disc saw according to the invention indicated generally by the reference numeral 1 of the type which is typically used in an angle grinder, and is suitable for cutting and grinding metals, such as steel, cast iron and other metals and alloys, as well as ceramics, stone and other masonry materials, although, it will be readily apparent to those skilled in the art that the rotary disc saw 1 may be used for cutting and grinding other materials. The rotary disc saw 1 comprises a carrier disc 3 of steel having a pair of major surfaces, namely, a major surface 5a and a major surface 5b, and terminates in an outer periphery 7, which in this embodiment of the invention is circular. The carrier disc 3 defines a geometric central axis 11.

A plurality of circumferentially spaced apart cutting elements 9 are secured to the carrier disc 3 around the outer periphery 7 thereof. Each cutting element 9 defines opposite side faces 8 and extends radially outwardly from the outer periphery 7 of the cutting disc 3. In this embodiment of the invention, each cutting element extends a circumferential distance *s₁* around the outer periphery 7 of the carrier disc 3 of approximately 38mm, and the circumferential spacing *s₂* between adjacent ones of the cutting elements 9 is approximately 5.1mm. However, it is envisaged that the circumferential distance *s₁* around the outer periphery 7 of the carrier disc 3 along which each cutting element extends may lie in the range of 19mm to 45mm, and the circumferential spacing *s₂* between adjacent ones of the cutting elements 9 may lie in the range of 1mm to 15mm. The cutting elements 9 are of steel impregnated with hard cutting particles, which in this embodiment of the invention are diamond particles. Alternatively, the cutting elements 9 may be impregnated with synthetic diamond particles, or the cutting elements 9 may comprise a sintered carbide material.

The cutting elements 9 are of thickness *t₁* which is greater than the thickness *t₂* of the carrier disc 3 in order to avoid jamming of the carrier disc 3 in a slot cut in a workpiece by the rotary disc saw 1. In this embodiment of the invention the thickness *t₁* of each cutting element 9 is approximately 2.6mm, and the thickness *t₂* of the carrier disc 3 is approximately 1.8mm. However, it is envisaged that the thickness *t₁* of each cutting element 9 may lie in the range of 2.2mm to 4.6mm, and the thickness *t₂* of the carrier disc 3 may lie in the range of 1.4mm to 3.5mm.

A circular shaft accommodating bore 10 extends centrally and axially through the carrier disc 3 for in use engaging a drive shaft on which the rotary disc saw 1 is rigidly secured in order that the rotary disc saw 1 rotates with and is driven by the drive shaft. The shaft accommodating bore 10 defines a central axis (not shown) coinciding with the central axis 11 of the carrier disc 3.

Such carrier discs and cutting elements of rotary disc saws as the carrier disc 3 and the cutting elements 9 of the rotary disc saws 1, will be well known to those skilled in the art, and further description should not be required.

A noise damping disc 15 of steel having a pair of major surfaces 16a and 16b, and terminating in a circular outer periphery 18 is attached coaxially to the major surface 5a of the carrier disc 3 by a layer of adhesive 20 which bonds the major surface 16a of the noise damping disc 15 to the major surface 5a of the carrier disc 3 as will be described below. The noise damping disc 15 defines a central geometric axis 19, which when the noise damping disc 15 is attached to the carrier disc 3, coincides with the central axis 11 of the carrier disc 3. A circular shaft accommodating bore 22 extends centrally and axially through the noise damping disc 15, and defines a central axis (not shown), which when the noise damping disc 15 is attached to the carrier disc 3, coincides with the central axis 11 of the carrier disc 3. The shaft accommodating bore 22 of the noise damping disc 15 is of diameter slightly greater than the diameter of the shaft accommodating bore 10 extending through the carrier disc 3, and is axially aligned with the shaft accommodating bore 10 of the carrier disc 3. In this embodiment of the invention the diameter d of the outer periphery 18 of the noise damping disc 15 is of length equal to approximately 44% of the diameter D of the outer periphery 7 of the carrier disc 3. In this embodiment of the invention the diameter D of the outer periphery 7 of the carrier disc 3 is approximately 206mm, and the diameter d of the outer periphery 18 of the noise damping disc 15 is approximately 90mm.

In this embodiment of the invention the noise damping disc 15 is of thickness *t₃* between the major surfaces 16a and 16b of 1.5mm approximately, and when bonded to the carrier disc 3, the major surface 16b of the noise damping disc 15 extends proud of a plane 21 defined by the side faces 8 of the cutting elements 9 on the adjacent side of the carrier disc 3. The noise damping disc 15 is bonded to the major surface 5a of the carrier disc 3, which in use is the major surface of the carrier disc 3 remote from the drive motor and gear box of the angle grinder driving the drive shaft on which the carrier disc 3 is rigidly secured. It is envisaged that the thickness *t₃* of the noise damping disc may range from 1mm to 2.5mm.

Turning now to the adhesive bonding of the noise damping disc 15 to the carrier disc 3, in this embodiment of the invention the adhesive 20 comprises an adhesive, which when cured forms a resilient, elastic, rubberlike layer 23 bonding the noise damping disc 15 to the carrier disc 3. Ideally, the adhesive is temperature stable up to 120°C. However, it is envisaged that an adhesive which is temperature stable up to 70°C would be adequate, and it is also envisaged that an adhesive which is temperature stable at 170°C for up to twenty minutes would also be suitable. The adhesive 20 is applied continuously over the entire surface area of the major surface 16a of the noise damping disc 15. The adhesive 20 is applied to the major surface 16a of the noise damping disc 15 to a depth so that when the adhesive 20 is fully cured with the noise damping disc 15 securely bonded by the adhesive 20 to the carrier disc 3, the adhesive 20 forms the rubberlike adhesive layer 23 between the noise damping disc 15 and the carrier disc 3. The rubberlike adhesive layer 23 is of thickness *t₄* of approximately 0.8mm, although, it is envisaged that the thickness of the rubberlike adhesive layer 23 could lie in the range of 0.3mm to 1mm, although, preferably, the rubberlike adhesive layer 23 would be of thickness lying in the range of 0.3mm to 0.8mm.

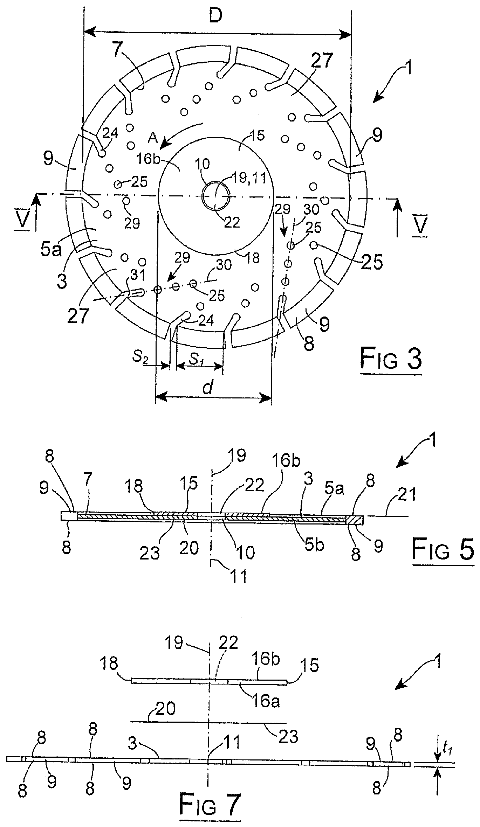

Returning now to the carrier disc 3, the carrier disc 3 is provided with a plurality of circumferentially spaced apart heat expansion compensating slots 24 which extend inwardly from the outer periphery 7 of the carrier disc 3 between adjacent pairs of the cutting elements 9. In this embodiment of the invention each slot 24 extends inwardly into the carrier disc 3 from the outer periphery 7 thereof at an angle α less than 90° to a tangent to the outer periphery 7 adjacent the slot 24. In this embodiment of the invention the angle α of each slot 24 to the corresponding tangent is approximately 15°. The slots 24 extend inwardly into the carrier disc 3 in a leading direction relative to the normal rotational direction of the rotary disc saw 1. The normal rotational direction of the rotary disc saw 1 is indicated by the arrow A in Fig. 3. In this embodiment of the invention each slot 24 extends a distance of approximately 15mm into the carrier disc 3 from the outer periphery 7 thereof.

A plurality of perforations, in this embodiment of the invention cooling bores 25 of circular transverse cross section extend through the carrier disc 3 in a circumferential area 27 extending around the carrier disc 3 between the outer periphery 18 of the noise damping disc 15 and the outer periphery 7 of the carrier disc 3. The bores 25 are arranged in circumferentially spaced apart groups 29, and the bores 25 of each group 29 are spaced apart from each other and define a straight line 30. In this embodiment of the invention, the straight line 30 defined by the bores 25 of each group 29 thereof are aligned with a centreline 31 defined by an adjacent corresponding one of the slots 24. Although while it is desirable that the straight line 30 defined by the bores 25 of each group 29 thereof is aligned with the centreline of an adjacent corresponding one of the slots 24, it is not essential, and the straight lines 30 defined by the bores 25 of the respective groups 29 need not be aligned with the centrelines of the corresponding slots 24, for example, they could be parallel to the centrelines of the corresponding adjacent slots.

In use, the rotary disc saw 1 is secured to a drive shaft of a rotary disc saw apparatus, neither of which are shown, of the type which will be well known to those skilled in the art, and is operated in a normal manner as a conventional rotary disc saw. However, in this embodiment of the invention, since the major surface 16b of the noise damping disc 15 extends proud of the plane defined by the adjacent side faces 8 of the cutting elements 9, the rotary disc saw 1 is not advanced into the workpiece to an extent that the noise damping disc 15 would engage the workpiece.

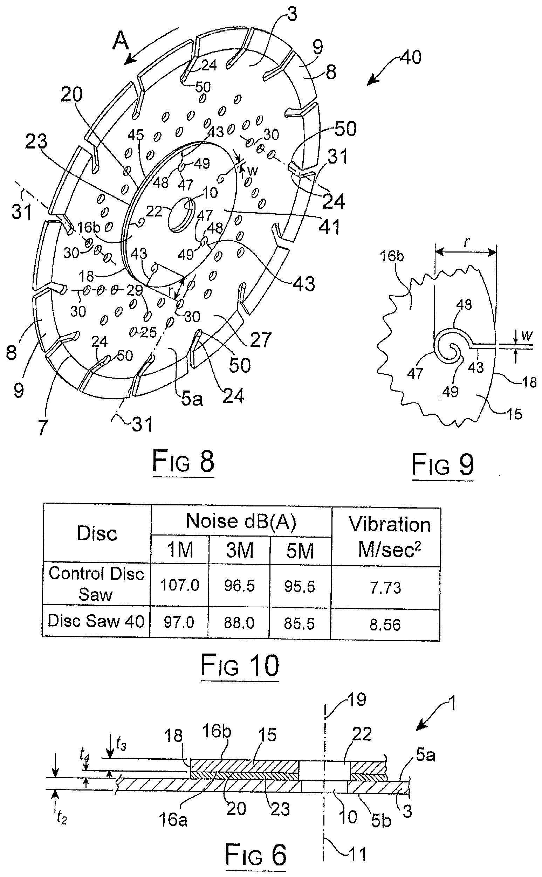

Referring now to Figs. 8 and 9 there is illustrated a rotary disc saw according to another embodiment of the invention indicated generally by the reference numeral 40. The rotary disc saw 40 is substantially similar to the rotary disc saw 1, and similar components are identified by the same reference numerals. The main differences between the rotary disc saw 40 and the rotary disc saw 1 lies in the noise damping disc, which in this embodiment of the invention is indicated by the reference numeral 41. In this embodiment of the invention a plurality, namely, five circumferentially spaced apart noise damping slots 43 extend inwardly into the noise damping disc 41 from the outer periphery 45 of the noise damping disc 41. Each noise damping slot 43 is of width w of approximately 0.2mm and extends through the noise damping disc 43 from the major surface 16a to the major surface 16b, and extends substantially radially inwardly from the outer periphery 45 of the noise damping disc 41. Each noise damping slot 43 terminates at its inner end in an arcuate slot 47 having a circular portion 48 which in turn terminates in an inner spiral portion 49. Each damping slot 43 extends substantially radially into the noise damping disc 41 from the outer periphery 45 thereof a radial distance r of approximately 15mm, which in this embodiment of the invention is approximately 16% of the diameter d of the noise damping disc 41 which is approximately 90mm.

The diameters of the carrier disc 3 of the rotary disc saw 40 and the carrier disc 3 of the rotary disc saw 1 are identical, and the diameters of the noise damping disc 41 and the noise damping disc 15 are also identical. The thicknesses *t₂* of the carrier disc 3 of the rotary disc saw 40 and the rotary disc saw 1 are identical, and the thicknesses *t₃* of the noise damping disc 41 and the noise damping disc 15 are also identical. The thickness *t₄* of the adhesive layers 23 of the disc saws 1 and 40 are identical, and the shape, size and thicknesses *t₁* of the cutting elements 9 of the disc saws 1 and 40 are also identical.

In the rotary disc saw 40, the heat expansion compensating slots 24, which are circumferentially spaced apart around the carrier disc 3 and extend inwardly from the outer periphery 5 thereof, are similar to the slots 24 of the carrier disc 3 of the rotary disc saw 1 described with reference to Figs. 1 to 7, with the exception that in the rotary disc saw 40 each slot 24 adjacent its inner end terminates in a through-bore 50 extending through the carrier disc 3. Additionally, the arrangements of the cooling bores 25 in the carrier disc 3 of the rotary disc saw 40 is slightly different to the arrangement of the cooling bores 25 in the carrier disc 3 of the rotary disc saw 1, although the cooling bores 25 in the carrier disc 3 of the rotary disc saw 40 are arranged in groups 29 which define respective straight lines 30, which are also aligned with a centre line 31 of the corresponding slot 24.

Otherwise, the rotary disc saw 40 and its use is similar to that of the rotary disc saw 1.

Comparative tests have been carried out on the rotary disc saw 40 of Figs. 8 and 9 according to the invention, and a control rotary disc saw. The control rotary disc saw was identical to the rotary disc saw 40 but without the noise damping disc and without the rubberlike adhesive layer 23. It was found that the acoustic noise produced by the rotary disc saw 40 according to the invention was significantly less than the acoustic noise produced by the control rotary disc saw when the rotary disc saw 40 and the control rotary disc saw were cutting similar concrete blocks. In the comparative tests, similar concrete blocks were cut for fifteen minutes by the rotary disc saw 40 and the control rotary disc saw. Acoustic sound measurements were taken at distances of one metre, three metres and five metres from the rotary disc saw 40 and the control rotary disc saw. The table in Fig. 10 sets forth the results of the tests.

As can be seen from the table of Fig. 10, the control rotary disc saw at one metre therefrom produced acoustic noise of 107.0dB(A), while at one metre from the rotary disc saw 40, the rotary disc saw 40 produced acoustic noise of 97.1dB(A). At three metres from the control rotary disc saw and the rotary disc saw 40, the corresponding acoustic noise values were 96.5dB(A) and 88.0dB(A), respectively. At five metres from the control rotary disc saw and the rotary disc saw 40, the corresponding acoustic noise values were 95.5dB(A) and 85.5dB(A), respectively.

These results show that the provision of the noise damping disc 15 bonded by the rubberlike adhesive layer 23 to the carrier disc 3 produces a significant reduction in the noise produced by the rotary disc saw 40. At one metre from the respective rotary disc saws, the reduction in noise relative to that produced by the control rotary disc saw was 10dB(A), while at three metres from the respective rotary disc saws, the reduction in noise was 8.5dB(A), and at five metres from the respective discs, the noise reduction achieved by the rotary disc saw 40 according to the invention was 10dB(A).

During these comparative tests, the vibration values for the two disc saws 1 and 40 were also recorded in acceleration units, which is a conventional way of measuring vibration in hand tools. As can be seen from the right-hand most column of Fig. 10, while the vibration was slightly higher in the disc saw 40 than the vibration generated by the control disc saw, the slight increase in vibration of the disc saw 40 is only marginal with respect to the vibration of the control disc saw.

While the rotary disc saws according to the invention have been described as comprising heat expansion compensating slots 24 and cooling bores 25, while the provision of the slots 24 and the bores 25 is desirable, it is not essential. It will also be appreciated that the noise damping disc 15 of the rotary disc saw 1 may be provided with noise damping slots, and the number of noise damping slots in the noise damping discs of both the rotary disc saws 1 and 40 may be more or less than the number of noise damping slots described in the noise damping disc 41 of the rotary disc saw 40, and additionally, the shape of the noise damping slots may be different to that of the noise damping slots of the noise damping disc 41. In some embodiments of the invention it is envisaged that the noise damping slots may extend solely radially inwardly from the outer peripheries of the noise damping discs, and the width of the noise damping slots may be greater or less than that described with reference to the noise damping slots 43 of the noise damping disc 41.

It is also envisaged that the noise damping slots of the noise damping disc may extend at an angle less than 90° to a tangent to the outer periphery of the noise damping disc adjacent the noise damping slot, and in which case, it is envisaged that the noise damping slots would extend inwardly from the outer periphery of the noise damping disc in a trailing or leading direction relative to the normal rotational direction of the rotary disc saw. Indeed, it is envisaged in some embodiments of the invention that the angle to the tangent at which the noise damping slots would extend would be similar to the angle to the corresponding tangent at which the slots 24 extend from the outer periphery of the carrier disc.

It will also be appreciated that any desired and suitable number of cutting elements may be provided around the carrier disc, and it will also be appreciated that other sizes and shapes of slots 24 may be provided extending inwardly from the outer periphery of the carrier disc.

While the rotary disc saws 1 and 40 have been described as being of specific dimensions, it will be readily apparent to those skilled in the art that the disc saws may be of different dimensions, for example, it is envisaged that the disc saws may be of nominal diameter in the range of 150mm to 250mm, where the nominal diameter is measured to the outer periphery of the cutting elements. Additionally, it will be appreciated that any number of cutting elements may be provided around the periphery of the disc saws, and the number of cutting elements will depend firstly, on the diameter of the disc saw, and secondly, on the use to which the disc saw is to be put. It will also be appreciated that the circumferential distance which each cutting element will extend along the outer periphery of the carrier disc will also be different from disc saw to disc saw, again depending on the use to which the disc saw is to be put, and also depending on the diameter of the disc saw. Additionally, it will be appreciated that the spacing between adjacent cutting elements may also be different from disc saw to disc saw. Further, it is envisaged that the radial distance each cutting element extends from the outer periphery of the carrier disc will be different from disc saw to disc saw, again depending on the diameter of the disc saw and the use to which the disc saw is to be put.

The diameter of the noise damping disc will also vary, depending on the diameter of the disc saw. However, in general, it is envisaged that the diameter of the noise damping disc will not exceed 50% of the diameter of the carrier disc, and preferably, it is envisaged that the diameter of the noise damping disc will range from 38% to 50% of the diameter of the carrier disc, although in some cases, the diameter of the noise damping disc may be as much as 60% of the diameter of the carrier disc.

While the noise damping disc has been described as comprising steel material, the noise damping disc may be of any suitable material, and in some embodiments of the invention, it is envisaged that the noise damping disc may comprise copper, aluminium or a hard plastics material or a reinforced epoxy resin material. In general, it is desirable that the material of the noise damping disc should comprise a rigid material.

## Claims

1. A rotary disc saw comprising
a carrier disc (3) having a pair of major surfaces (5) and a shaft accommodating bore (10) extending therethrough from one of the major surfaces (5) to the other one of the major surfaces (5), the carrier disc (3) terminating adjacent its outer periphery (7) in one or more cutting elements (9),
a noise damping disc (15, 41) having a pair of major surfaces (16), and a shaft accommodating bore (22) extending therethrough from one of the major surfaces (16) of the noise damping disc (15, 41) to the other one of the major surfaces (16) thereof, the noise damping disc (15, 41) being attached to one of the major surfaces (5) of the carrier disc (3) and being coaxial with the carrier disc (3),
**characterised in that**
the noise damping disc (15, 41) is of maximum diameter not greater than 60% of the diameter of the outer periphery of the carrier disc (3), and is attached to the carrier disc (3) by a layer of a resilient adhesive (20) located between adjacent ones of the major surfaces (5, 16) of the carrier disc (3) and the noise damping disc (15, 41) and extending continuously over substantially the entire adjacent major surface (16) of the noise damping disc (15, 41).

2. A rotary disc saw as claimed in Claim 1 **characterised in that** the adhesive of the adhesive layer (20) comprises a rubberlike adhesive.

3. A rotary disc saw as claimed in Claim 1 or 2 **characterised in that** the adhesive of the adhesive layer (20) when cured forms a rubberlike adhesive layer.

4. A rotary disc saw as claimed in any preceding claim **characterised in that** the adhesive layer (20) extends over the entire area of the corresponding major surface (16) of the noise damping disc (15, 41).

5. A rotary disc saw as claimed in any preceding claim **characterised in that** the adhesive of the adhesive layer (20) is temperature stable at temperatures up to 70°C.

6. A rotary disc saw as claimed in any preceding claim **characterised in that** the adhesive of the adhesive layer (20) is stable at temperatures up to 120°C.

7. A rotary disc saw as claimed in any preceding claim **characterised in that** the adhesive layer (20) is of thickness in the range of 0.3mm to 1mm.

8. A rotary disc saw as claimed in any preceding claim **characterised in that** the adhesive layer (20) is of thickness in the range of 0.3mm 0.8mm.

9. A rotary disc saw as claimed in any preceding claim **characterised in that** the maximum diameter of the noise damping disc (15, 41) lies in the range of 38% to 60% of the diameter of the outer periphery (7) of the carrier disc (3).

10. A rotary disc saw as claimed in any preceding claim **characterised in that** the thickness of the noise damping disc (15, 41) between the major surfaces (16) thereof lies in the range of 1.0mm to 2.5mm.

11. A rotary disc saw as claimed in any preceding claim **characterised in that** the thickness of the noise dampening disc (15, 41) between the major surfaces (16) thereof lies in the range of 1.25mm to 2.0mm.

12. A rotary disc saw as claimed in any preceding claim **characterised in that** a plurality of circumferentially spaced apart noise damping slots (43) extend inwardly into the noise damping disc (41) from the outer periphery (45) thereof.

13. A rotary disc saw as claimed in Claim 12 **characterised in that** each noise damping slot (43) of the noise damping disc (41) terminates adjacent its inward end in an arcuate slot (47, 48, 49).

14. A rotary disc saw as claimed in Claim 12 or 13 **characterised in that** each noise damping slot (43) of the noise damping disc (41) extends into the noise damping disc (41) from the outer periphery (45) thereof a radial distance from the outer periphery (45) of the noise damping disc (41) not greater than 26% of the diameter of the noise damping disc (41).

15. A rotary disc saw as claimed in any preceding claim **characterised in that** the noise damping disc (15, 41) comprises any one of steel material, copper material, aluminium material, a hard plastics material or a reinforced epoxy resin material.

## Patentansprüche

1. Rotationsscheibensäge, umfassend
eine Trägerscheibe (3) mit einem Paar Hauptflächen (5) und einer Wellenaufnahmebohrung (10), die sich durch diese hindurch von einer der Hauptflächen (5) zur anderen der Hauptflächen (5) erstreckt, wobei die Trägerscheibe (3) angrenzend an ihren Außenumfang (7) in einem oder mehreren Schneidelementen (9) endet,
eine geräuschdämpfende Scheibe (15, 41) mit einem Paar Hauptflächen (16) und eine Wellenaufnahmebohrung (22), die sich durch diese von einer der Hauptflächen (16) der geräuschdämpfenden Scheibe (15, 41) zu deren anderer Hauptfläche (16) erstreckt, wobei die geräuschdämpfende Scheibe (15, 41) an einer der Hauptflächen (5) der Trägerscheibe (3) angebracht ist und koaxial zur Trägerscheibe (3) ist,
**dadurch gekennzeichnet, dass**
die geräuschdämpfende Scheibe (15, 41) einen maximalen Durchmesser von nicht größer als 60 % des Durchmessers des Außenumfangs der Trägerscheibe (3) hat, und an der Trägerscheibe (3) durch eine Schicht eines elastischen Klebstoffs (20) befestigt ist, die sich zwischen benachbarten Hauptflächen (5, 16) der Trägerscheibe (3) und der geräuschdämpfenden Scheibe (15, 41) befindet und sich kontinuierlich über im Wesentlichen die gesamte benachbarte Hauptfläche (16) der geräuschdämpfenden Scheibe (15, 41) erstreckt.

2. Rotationsscheibensäge nach Anspruch 1, **dadurch gekennzeichnet, dass** der Klebstoff der Klebstoffschicht (20) einen gummiartigen Klebstoff umfasst.

3. Rotationsscheibensäge nach Anspruch 1 oder 2, **dadurch gekennzeichnet, dass** der Klebstoff der Klebstoffschicht (20) nach dem Aushärten eine gummiartige Klebstoffschicht bildet.

4. Rotationsscheibensäge nach einem der vorhergehenden Ansprüche, **dadurch gekennzeichnet, dass** sich die Klebstoffschicht (20) über die gesamte Fläche der entsprechenden Hauptfläche (16) der geräuschdämpfenden Scheibe (15, 41) erstreckt.

5. Rotationsscheibensäge nach einem der vorhergehenden Ansprüche, **dadurch gekennzeichnet, dass** der Klebstoff der Klebstoffschicht (20) bei Temperaturen bis zu 70°C temperaturstabil ist.

6. Rotationsscheibensäge gemäß einem der vorhergehenden Ansprüche, **dadurch gekennzeichnet, dass** der Klebstoff der Klebstoffschicht (20) bei Temperaturen bis zu 120°C stabil ist.

7. Rotationsscheibensäge gemäß einem der vorhergehenden Ansprüche, **dadurch gekennzeichnet, dass** die Klebstoffschicht (20) eine Dicke im Bereich von 0,3 mm bis 1 mm aufweist.

8. Rotationsscheibensäge gemäß einem der vorhergehenden Ansprüche, **dadurch gekennzeichnet, dass** die Klebstoffschicht (20) eine Dicke im Bereich von 0,3 mm bis 0,8 mm aufweist.

9. Rotationsscheibensäge gemäß einem der vorhergehenden Ansprüche, **dadurch gekennzeichnet, dass** der maximale Durchmesser der geräuschdämpfenden Scheibe (15, 41) im Bereich von 38 % bis 60 % des Durchmessers des Außenumfangs (7) der Trägerscheibe (3) liegt.

10. Rotationsscheibensäge gemäß einem der vorhergehenden Ansprüche, **dadurch gekennzeichnet, dass** die Dicke der geräuschdämpfenden Scheibe (15, 41) zwischen deren Hauptflächen (16) im Bereich von 1,0 mm bis 2,5 mm liegt.

11. Rotationsscheibensäge gemäß einem der vorhergehenden Ansprüche, **dadurch gekennzeichnet, dass** die Dicke der geräuschdämpfenden Scheibe (15, 41) zwischen deren Hauptflächen (16) im Bereich von 1,25 mm bis 2,0 mm liegt.

12. Rotationsscheibensäge gemäß einem der vorhergehenden Ansprüche, **dadurch gekennzeichnet, dass** sich mehrere in Umfangsrichtung beabstandete geräuschdämpfende Schlitze (43) vom Außenumfang (45) der geräuschdämpfenden Scheibe (41) nach innen in die geräuschdämpfende Scheibe (41) erstrecken.

13. Rotationsscheibensäge nach Anspruch 12, **dadurch gekennzeichnet, dass** jeder geräuschdämpfende Schlitz (43) der geräuschdämpfenden Scheibe (41) angrenzend an sein inneres Ende in einem bogenförmigen Schlitz (47, 48, 49) endet.

14. Rotationsscheibensäge nach Anspruch 12 oder 13, **dadurch gekennzeichnet, dass** jeder geräuschdämpfende Schlitz (43) der geräuschdämpfenden Scheibe (41) sich in die geräuschdämpfende Scheibe (41) vom äußeren Umfang (45) derselben ausgehend über eine radiale Distanz vom äußeren Umfang (45) der geräuschdämpfenden Scheibe (41) erstreckt, die nicht größer als 26 % des Durchmessers der geräuschdämpfenden Scheibe (41) ist.

15. Rotationsscheibensäge nach einem der vorhergehenden Ansprüche, **dadurch gekennzeichnet, dass** die geräuschdämpfende Scheibe (15, 41) eines der folgenden Materialien umfasst: Stahlmaterial, Kupfermaterial, Aluminiummaterial, Hartkunststoffmaterial oder verstärktes Epoxidharz-Material.

## Revendications

1. Une scie à disque rotatif comprenant
un disque porteur (3) ayant une paire de surfaces principales (5) et un alésage de logement d'arbre (10) s'étendant de l'une des surfaces principales (5) à l'autre des surfaces principales (5), le disque porteur (3) se terminant à côté de sa périphérie extérieure (7) par un ou plusieurs éléments de coupe (9),
un disque d'amortissement du bruit (15, 41) ayant une paire de surfaces principales (16), et un alésage de logement d'arbre (22) s'étendant de l'une des surfaces principales (16) du disque d'amortissement du bruit (15, 41) à l'autre de ses surfaces principales (16), le disque d'amortissement du bruit (15, 41) étant fixé à l'une des surfaces principales (5) du disque porteur (3) et étant coaxial avec le disque porteur (3), **caractérisé par le fait que**
le disque amortisseur de bruit (15, 41) a un diamètre maximal ne dépassant pas 60 % du diamètre de la périphérie extérieure du disque support (3), et est fixé au disque support (3) par une couche d'adhésif résilient (20) située entre les surfaces principales adjacentes (5, 16) du disque support (3) et du disque amortisseur de bruit (15, 41) et s'étendant de manière continue sur la quasi-totalité de la surface principale adjacente (16) du disque amortisseur de bruit (15, 41).

2. Une scie à disque rotatif selon la revendication 1, **caractérisée par le fait que** l'adhésif de la couche adhésive (20) comprend un adhésif caoutchouteux.

3. Une scie à disque rotatif selon la revendication 1 ou 2, **caractérisée par le fait que** l'adhésif de la couche adhésive (20), une fois durci, forme une couche adhésive caoutchouteuse.

4. Une scie à disque rotatif selon l'une des revendications précédentes, **caractérisée par le fait que** la couche adhésive (20) s'étend sur toute la surface principale correspondante (16) du disque amortisseur de bruit (15, 41).

5. Une scie à disque rotatif selon l'une des revendications précédentes, **caractérisée par le fait que** l'adhésif de la couche adhésive (20) est stable en température à des températures allant jusqu'à 70°C.

6. Une scie à disque rotatif selon l'une des revendications précédentes, **caractérisée par le fait que** l'adhésif de la couche adhésive (20) est stable à des températures allant jusqu'à 120°C.

7. Une scie à disque rotatif selon l'une des revendications précédentes, **caractérisée par le fait que** la couche adhésive (20) a une épaisseur comprise dans l'intervalle allant de 0,3 mm à 1 mm.

8. Une scie à disque rotatif selon l'une des revendications précédentes, **caractérisée par le fait que** la couche adhésive (20) a une épaisseur comprise dans l'intervalle allant de 0,3 mm 0,8 mm.

9. Une scie à disque rotatif selon l'une quelconque des revendications précédentes, **caractérisée par le fait que** le diamètre maximal du disque d'amortissement du bruit (15, 41) est compris dans l'intervalle allant de 38 % à 60 % du diamètre de la périphérie extérieure (7) du disque porteur (3).

10. Une scie à disque rotatif selon l'une des revendications précédentes, **caractérisée par le fait que** l'épaisseur du disque amortisseur de bruit (15, 41) entre ses surfaces principales (16) est comprise dans l'intervalle allant de 1,0 mm à 2,5 mm.

11. Une scie à disque rotatif selon l'une des revendications précédentes, **caractérisée par le fait que** l'épaisseur du disque d'amortissement du bruit (15, 41) entre ses surfaces principales (16) est comprise dans l'intervalle allant de 1,25 mm à 2,0 mm.

12. Une scie à disque rotatif selon l'une quelconque des revendications précédentes, **caractérisée par le fait qu'**une pluralité de fentes d'amortissement du bruit (43) espacées circonférentiellement s'étendent vers l'intérieur du disque d'amortissement du bruit (41) à partir de la périphérie extérieure (45) de celui-ci.

13. Une scie à disque rotatif selon la revendication 12, **caractérisée par le fait que** chaque fente d'amortissement du bruit (43) du disque d'amortissement du bruit (41) se termine à côté de son extrémité intérieure par une fente en arc de cercle (47, 48, 49).

14. Une scie à disque rotatif selon la revendication 12 ou 13, **caractérisée par le fait que** chaque fente d'amortissement du bruit (43) du disque d'amortissement du bruit (41) s'étend dans le disque d'amortissement du bruit (41) à partir de la périphérie extérieure (45) de celui-ci à une distance radiale de la périphérie extérieure (45) du disque d'amortissement du bruit (41) ne dépassant pas 26 % du diamètre du disque d'amortissement du bruit (41).

15. Une scie à disque rotatif selon l'une des revendications précédentes, **caractérisée par le fait que** le disque amortisseur de bruit (15, 41) comprend l'un quelconque d'un matériau en acier, d'un matériau en cuivre, d'un matériau en aluminium, d'un matériau en plastique dur ou d'un matériau en résine époxy renforcée.
